# DEMANDE DE BREVET EUROPEEN

(11) **EP 0 728 420 A1**
(43) Date de publication de la demande: **28.08.1996**
(21) Numéro de dépôt: 95102439.7
(22) Date de dépôt: 21.02.1995
(51) Int. Cl.: A23L 3/3472, A23L 1/221

(54) **Procédé d'extraction d'antioxydants de matière végétale**

(71) Demandeur: SOCIETE DES PRODUITS NESTLE S.A., CH-1800 Vevey (CH)
(72) Inventeur: Aeschbach, Robert, CH-1800 Vevey (CH); Rossi, Patricia, CH-1814 La Tour-de-Peilz (CH)
(74) Mandataire: Archambault, Jean

(57) **Abrégé**

L'invention concerne un procédé d'obtention d'un extrait liquide d'antioxydants à partir d'une matière végétale, dans lequel on mélange la matière végétale et un alkylène glycol en C₂-C₆ servant de véhicule, puis on presse et on filtre le mélange pour obtenir un liquide limpide contenant les antioxydants.

## Description

La présente invention a pour objet un procédé d'extraction d'antioxydants de matière végétale à l'aide d'un alkylène glycol en C₂-C₆ par pression.

On connaît divers procédés d'extraction d'antioxydants de matière végétale.

WO 90/01271 décrit, entre autres, un procédé d'extraction d'antioxydants. Il s'agit d'un procédé d'extraction et/ou de traitement à chaud d'extraits d'origine végétale et/ou animale, riches en vitamines, en arômes et en substances ayant une activité antioxydante. Ce procédé d'extraction et/ou de traitement à chaud comprend plusieurs étapes et l'application de nombreuses conditions optionnelles, dont notamment l'utilisation éventuelle du 1,2-propylène glycol en tant que solvant d'extraction.

La présente invention a pour but de proposer un procédé d'extraction d'antioxydants de matière végétale avec un véhicule sélectionné et dans des conditions particulières telles que l'on puisse obtenir des antioxydants faciles à incorporer dans les milieux aqueux et les émulsions.

Le présent procédé permet d'obtenir un spectre plus important de composés antioxydants lors de l'extraction, par rapport à ceux que l'on aurait extraits auparavant. En effet, par exemple, lors de l'extraction d'antioxydants de romarin au propylène glycol par pression, selon la présente invention, on isole principalement de l'acide rosmarinique, en plus du carnosol et de l'acide carnosique.

A cet effet, le présent procédé d'extraction d'antioxydants de matière végétale est caractérisé par le fait que l'on mélange la matière végétale dont le taux global en eau est de 5 à 30 % en poids, avec un alkylène glycol en C₂-C₆ et que l'on soumet l'ensemble à une pression supérieure ou égale à 40 bar.

Pour atteindre le taux global en eau de 5 à 30 % en poids, on peut, le cas échéant, ajouter un peu d'eau, notamment 5 à 15 % d'eau en poids, à la matière végétale de départ.

On peut utiliser comme matière végétale de départ, seule ou en mélange, toute épice contenant des antioxydants, notamment le romarin, la sauge, le thym, l'origan et les clous de girofle, et toute plante contenant des antioxydants, notamment le thé vert, le café et les pelures de pommes de terre et de tomates. La matière végétale de départ peut être fraîche, entière ou moulue plus ou moins finement. Elle peut être strippée à la vapeur pour en éliminer la majeur partie des principes odorants qui ne sont pas souhaités pour certaines applications dans lesquelles on désire que les antioxydants soient aussi neutres que possible. Dans d'autres cas, on désire conserver dans les antioxydants liquides une partie au moins des principes odorants et la matière végétale de départ n'est alors pas strippée. Elle se présente de préférence sous forme séchée, qu'elle soit moulue ou non, strippée ou non.

L'alkylène glycol en C₂-C₆, utilisé comme véhicule, est de préférence le glycol, le 1,2-propylène glycol, ou le 1,3-butylène glycol.

De préférence, on mélange la matière végétale de départ avec l'alkylène glycol en C₂-C₆ à une température de 70-100°C.

Le mélange de la matière végétale de départ avec l'alkylène glycol en C₂-C₆ peut également se faire à température ambiante, par exemple à 20°C, de manière à garder au moins une partie des principes odorants de la matière végétale de départ.

De préférence, on effectue le mélange alkylène glycol en C₂-C₆ / matière végétale de départ dans un rapport pondéral de 0,5 à 2.

On peut effectuer une première extraction au MCT, c'est à dire à l'aide d'un mélange de triglycérides à chaine moyenne en C₆-C₁₂, de manière à n'extraire qu'une partie seulement des antioxydants, c'est à dire les antioxydants liposolubles, contenus dans la matière végétale de départ. Puis on peut effectuer une seconde extraction, selon la présente invention, sur le tourteau du premier pressage, de manière à isoler les antioxydants restants. En effet, par exemple dans le cas du romarin, on peut extraire principalement le carnosol et l'acide carnosique, lors d'une première extraction au MCT. Puis on peut recycler les feuilles de romarin de départ et effectuer une seconde extraction, au 1,2-propylène glycol, de manière à isoler principalement l'acide rosmarinique.

On peut prévoir un prétraitement enzymatique de la matière végétale, de manière à augmenter le rendement d'extraction. En effet dans le cas du romarin , par exemple, on peut augmenter le rendement d'extraction de 20 à 30 % en effectuant un prétraitement enzymatique avec 1 % en poids d'une glucanase, à environ 40° C, sous agitation pendant environ 4 h. Puis on filtre ou on centrifuge, avant de sécher la matière végétale à traiter.

Dans le but d'enrichir l'extrait d'antioxydants sans trop perdre de véhicule, on peut faire une première extraction d'antioxydants, selon la présente invention, et remettre le liquide limpide ainsi recueilli en présence d'une nouvelle charge de matière végétale. On peut renouveler cette opération plusieurs fois.

Aprés avoir mélangé sous agitation la matière végétale de départ, dont le taux global en eau est de 5 à 30 % en poids, avec l'alkylène glycol en C₂-C₆, on soumet l'ensemble à une pression supérieure ou égale à 40 bar. De préférence, pour le pressage, on utilise une presse à piston munie d'une cage filtrante, de type Carver (R), de manière à presser et à filtrer en une seule étape.

L'invention concerne également un procédé de protection d'une émulsion alimentaire, cosmétique ou pharmaceutique, caractérisé par le fait que l'on incorpore dans l'émulsion une quantité efficace d'extraits d'antioxydants d'origine végétale obtenus selon la présente invention.

Le procédé selon la présente invention est décrit plus en détails dans les exemples non limitatifs ci-après, dans lesquels les parties et pourcentages sont pondéraux, sauf indication contraire.

### Exemples 1-5

A 100 g de matière végétale de départ, séchée, hachée et non strippée, on ajoute 100 g de 1,2-propylène glycol. On laisse le tout sous agitation pendant 60 min à 80° C.

On presse le mélange dans une presse à piston, de type Carver (R), à 500 bar pendant 60 min.

On recueille un liquide limpide contenant les antioxydants. Le test Rancimat (R) à 110° C dans différentes graisses et huiles et la méthode d'électrode à oxygène à 30° C dans différentes huiles donnent le pouvoir antioxydant sous forme d'indices d'induction indiqués dans le tableau 1.
L'indice d'induction est défini comme étant le rapport:
temps d'induction (échantillon + huile) / temps d'induction (huile).

Dans les exemples 1 à 5, on utilise respectivement comme matière végétale de départ, du romarin, de la sauge, du thym, de l'origan sans eau ajoutée et du thé vert humidifié avec 10 % d'eau.

### Test d'oxydation: électrode à oxygène à 30° C.

On prépare une émulsion en mélangeant 5 % d'huile et le % indiqué en antioxydants par rapport à l'huile dans une solution tampon de pH 7( No.9477, Merck, Darmstadt, D) avec 0,1 % d'émulsifiant par agitation vigoureuse sous azote pendant 30 min que l'on émulsifie par 6 passages consécutifs à 30° C dans un microfluidiseur H 5000.
On mesure ensuite la stabilité oxydative de l'émulsion à l'aide d'une électrode TRI OX EO 200 (R) couplée avec un oxygène-mètre OXI 530 (R).
On attend 5 à 10 min jusqu'à ce que le pourcentage de saturation d'oxygène ait une valeur constante.
Cette mesure s'effectue à 30° C sous agitation en vase clos, après adjonction de 5 ml du catalyseur Hemin (Fluka AG, Buchs, CH) à 100 ml d'émulsion. Le catalyseur Hemin est préparé à partir de 52 mg de solution Hemin dans 100 ml d'eau, auxquels on ajoute 8 gouttes de KOH à 10 %.
Le temps d'induction représente la durée en heures pour une absorption totale de l'oxygène dissout.

### Test d'oxydation Rancimat (R) à 110° C:

On place l'échantillon dans un réacteur fermé.
L'échantillon est chauffé à 110° C et est saturé en oxygène provenant de l'air introduit dans le réacteur.

Durant l'oxydation, le réacteur est lui-même relié par un tube souple à un récipient contenant de l'eau distillée et où est plongée une électrode de platine.
Les composés volatiles entraînent une augmentation de la conductivité.
La conductivité est mesurée et les périodes d'induction sont calculées.
On détermine le temps d'induction graphiquement à partir de la courbe transcrite de la conductivité en fonction du temps par intersection de la tangente à la courbe avec l'axe des temps.

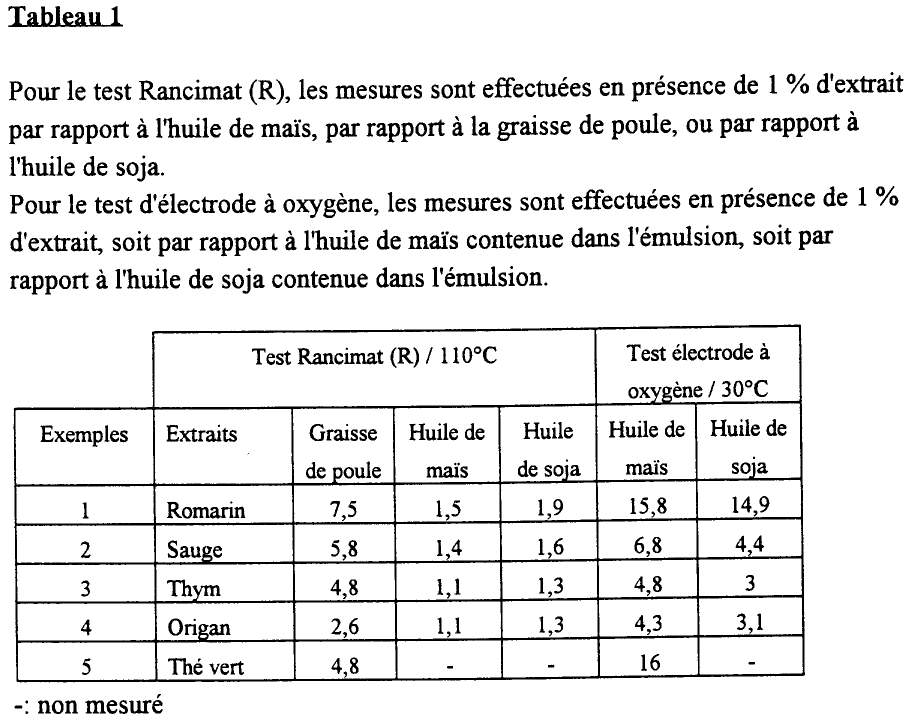

Les mesures du pouvoir antioxydant, indiquées sous forme d'indice d'induction dans le test d'électrode à oxygène, mettent en évidence la qualité et la stabilité oxydative des composés antioxydants en émulsion, par rapport aux résultats obtenus dans une huile dans le test d'oxydation Rancimat (R).
Il est tout à fait surprenant d'obtenir en émulsion un indice d'induction bien supérieur à celui obtenu dans l'huile.

### Exemples 6-11

A 100 g de matière végétale de départ, séchée, hachée et non strippée, on ajoute 50 g de 1,2-propylène glycol. On laisse le tout sous agitation pendant 60 min à température ambiante.

On presse le mélange dans une presse à piston, de type Carver (R), à 500 bar pendant 60 min.

On recueille un liquide limpide contenant les antioxydants.
Le test Rancimat (R) à 110° C, soit dans la graisse de poule, soit dans l'huile de maïs et la méthode d'électrode à oxygène à 30° C dans l'huile de maïs donnent le pouvoir antioxydant sous forme d'indices d'induction indiqués dans le tableau 2.

Dans les exemples 6 à 11, on utilise respectivement comme matière végétale de départ, du romarin, de la sauge, du thym, de l'origan, un cocktail d'épices (contenant 40 % de romarin, 20 % de sauge, 20 % de thym et 20 % d'origan) et des clous de girofle.

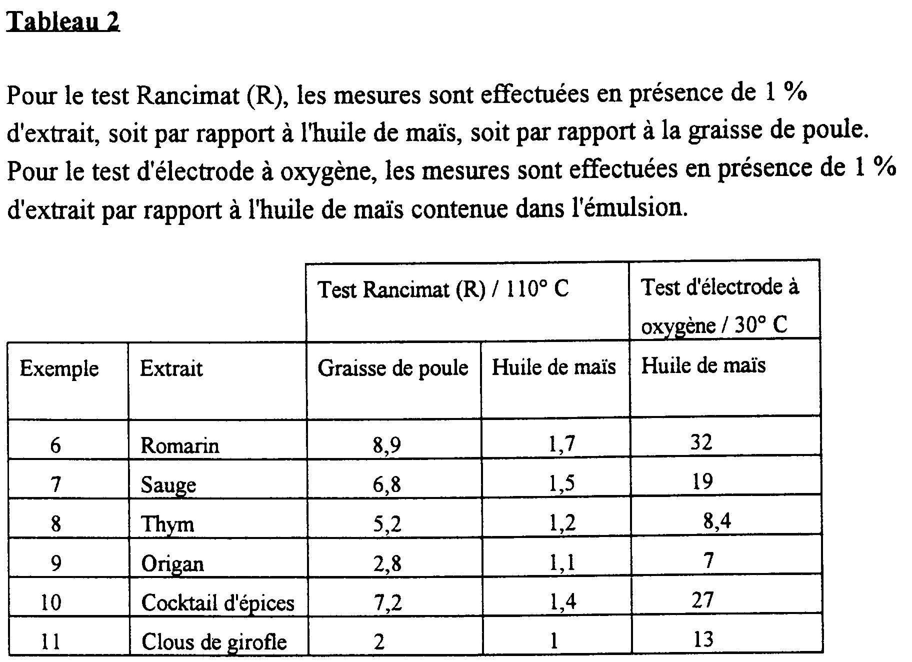

Les mesures du pouvoir antioxydant, indiquées sous forme d'indice d'induction dans le test d'électrode à oxygène, mettent en évidence la qualité et la stabilité oxydative des composés antioxydants en émulsion, par rapport aux résultats obtenus dans une huile dans le test d'oxydation Rancimat (R).
Il est tout à fait surprenant d'obtenir en émulsion un indice d'induction bien supérieur à celui obtenu dans l'huile.

### Exemples 12-14

A 100 g de matière végétale, séchée, hachée et strippée, on ajoute 100 g de 1,2-propylène glycol. On laisse le tout sous agitation pendant 60 min à 80° C.

On presse le mélange dans une presse à piston, de type Carver (R), à 500 bar pendant 60 min.

On recueille un liquide limpide contenant les antioxydants.
Le test Rancimat (R) à 110° C dans la graisse de poule et la méthode d'électrode à oxygène à 30° C dans l'huile de maïs donnent le pouvoir antioxydant sous forme d'indices d'induction indiqués dans le tableau 3.

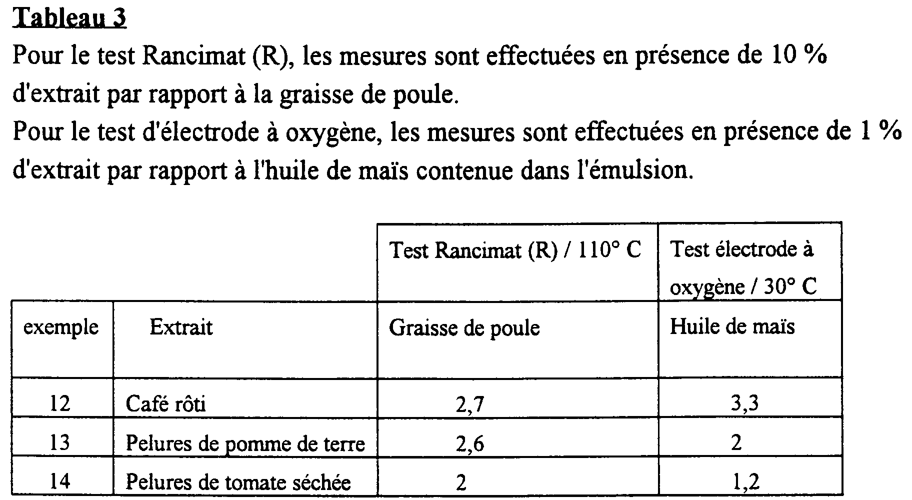

### Exemple 15

On humidifie 50 g de feuilles de romarin, séchées, hachées et non strippées, avec 5 g d'eau, puis on ajoute 50 g de MCT en C₈-C₁₀. On laisse le tout sous agitation pendant 60 min à 80° C.

On presse le mélange dans une presse à piston, de type Carver (R), à 500 bar pendant 60 min.

On recueille un liquide limpide contenant une partie des antioxydants.
Les mesures de chromatographie liquide haute performance (HPLC) permettent de quantifier les différents antioxydants extraits.
Le test Rancimat (R) à 110° C, soit dans la graisse de poule, soit dans l'huile de maïs et la méthode d'électrode à oxygène à 30° C dans l'huile de maïs donnent le pouvoir antioxydant sous forme d'indices d'induction.
Toutes ces mesures sont indiquées dans le tableau 4.

On effectue ensuite une seconde extraction sur le tourteau du premier pressage au 1,2-propylène glycol. A 54 g de tourteau, on ajoute 54 g de 1,2-propylène glycol. On laisse le tout sous agitation pendant 60 min à 80° C.

On presse le mélange dans une presse à piston, de type Carver (R), à 500 bar pendant 60 min.

On recueille un liquide limpide contenant les antioxydants.
On effectue les mêmes mesures que lors de la première étape. Les résultats de ces mesures sont indiqués dans le tableau 4.

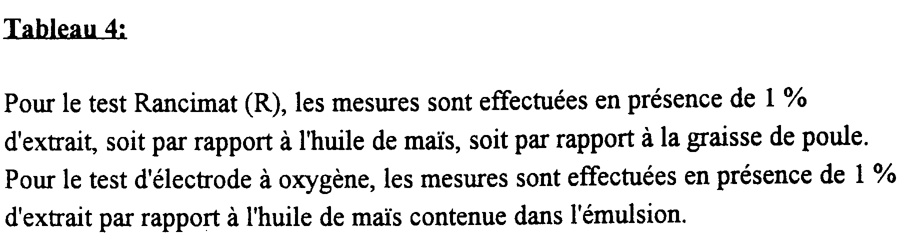

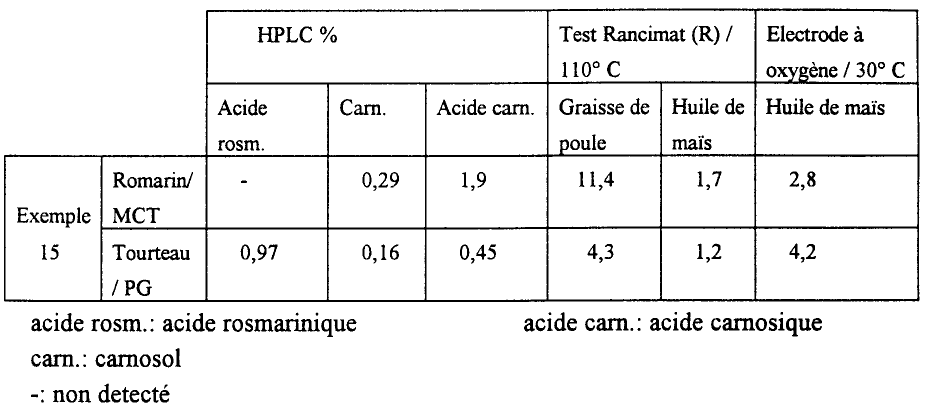

Les mesures HPLC permettent de quantifier les différents composés antioxydants extraits lors de la première extraction au MCT sur les feuilles de romarin, séchées hachées et non strippées, et lors de la seconde extraction au 1,2-propylène glycol sur le tourteau.
La première extraction d'antioxydants du romarin au MCT par pression permet d'extraire préférentiellement l'acide carnosique et le carnosol.
La seconde extraction au 1,2-propylène glycol sur le tourteau permet d'extraire principalement l'acide rosmarinique.

### Exemples 16-18

On humidifie 100 g de feuilles de romarin, séchées, hachées et non strippées, avec 10 g d'eau, puis on ajoute 100 g d'un alkylène glycol en C₂-C₄, utilisé comme véhicule. On laisse sous agitation pendant 60 min à 80° C.

On presse le mélange dans une presse à piston, de type Carver (R), à 500 bar pendant 60 min.

On recueille un liquide limpide contenant les antioxydants.
Les mesures HPLC permettent de quantifier les différents composés antioxydants extraits.

Le test Rancimat (R) à 110° C soit dans la graisse de poule, soit dans l'huile de maïs et la méthode d'électrode à oxygène à 30° C dans l'huile de maïs donnent le pouvoir antioxydant sous forme d'indice d'induction.
L'ensemble des résultats est indiqué dans le tabeau 5.

Dans les exemples 16 à 18, on utilise respectivement comme véhicule le glycol, le 1,2-propylène glycol et le 1,3- butylène glycol.

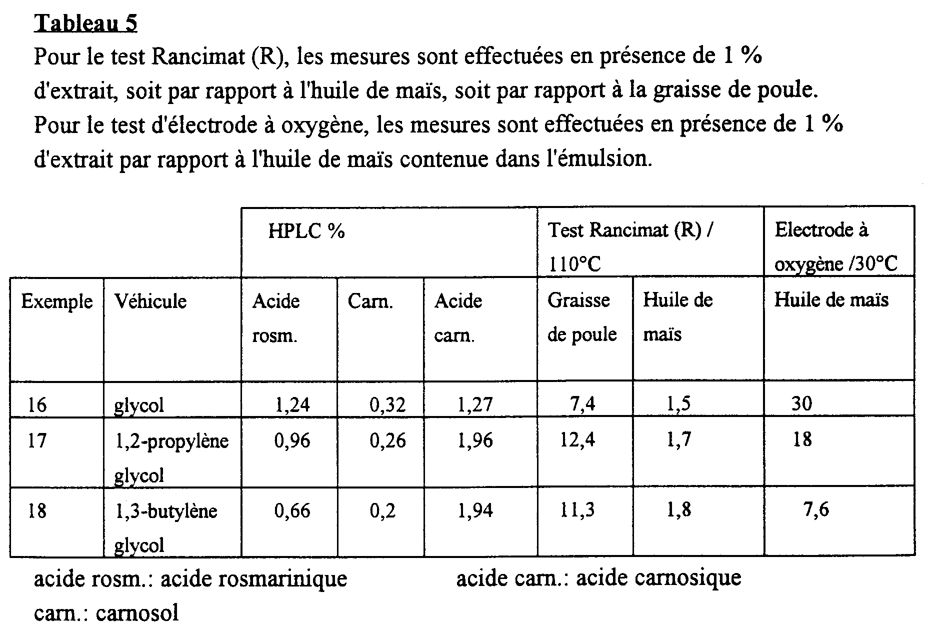

En utilisant comme véhicule, soit le gycol, soit le 1,2-propylène glycol, soit le 1,3-butylène glycol, lors de l'extraction par pression de composés antioxydants du romarin, on extrait principalement l'acide rosmarinique et l'acide carnosique.

### Exemples 19-23

On procède de la manière décrite aux exemples 6 à 10.

On recueille un liquide limpide contenant les antioxydants.
On effectue des mesures HPLC, de manière à identifier et quantifier les composés antioxydants fractionnés à partir des différents extraits.
Les résultats sont indiqués dans le tableau 6.

**Tableau 6**

| | | HPLC % | | | | |
|---|---|---|---|---|---|---|
| Exemple | Extrait | Acide rosm. | Carv. | Thym. | Carn. | Acide carn. |
| 19 | romarin | 1,36 | - | - | 0,6 | 2,18 |
| 20 | sauge | 1,03 | - | - | 0,78 | 1,03 |
| 21 | thym | 0,99 | - | 0,78 | - | - |
| 22 | origan | 1,04 | 2,31 | 0,49 | - | - |
| 23 | cocktail d'épices | 1,26 | 0,52 | 0,17 | 0,68 | 0,77 |
| acide rosm.: acide rosmarinique carn.: carnosol carv.: carvacrol acide carn.: acide carnosique thym.: thymol -: non detecté | | | | | | |

Il est surprenant de constater que pour les matières végétales de départ ci-dessus, on obtient un spectre important de composés antioxydants après extraction au 1,2-propylène glycol par pression selon la présente invention.

### Exemple 24

On traite 20 g de romarin non strippé et moulu en présence de 120 ml d'eau avec 0,2 g de Glucanex ((R), Novo) pendant 4 h à 40° C, à pH 4, puis on filtre et sèche le résidu.

On ajoute ensuite 10 g de 1,2-propylène glycol et on traite le mélange 60 min à 100° C.

On presse le mélange dans une presse à piston, de type Carver (R) et on recueille un liquide limpide contenant 2,5 % d'antioxydants avec un rendement de 95 % par rapport au 1,2-propylène glycol engagé.

### Exemple 25

A 100 g de feuilles de romarin, séchées, hachées et non strippées, on ajoute 100 g de 1,2-propylène glycol. On laisse le tout sous agitation pendant 60 min à 80° C.

On presse le mélange dans une presse à piston, de type Carver (R), à 500 bar pendant 60 min.

On recueille un liquide limpide contenant les antioxydants.

On effectue ensuite une seconde extraction au 1,2-propylène glycol, de la manière décrite ci-dessus dans les mêmes proportions, sur une nouvelle charge de matière végétale en présence du liquide limpide recueilli au cours de la première extraction.

On recueille un liquide limpide enrichi en antioxydants.

## Revendications

1. Procédé d'extraction d'antioxydants de matière végétale, caractérisé par le fait que l'on mélange la matière végétale dont le taux global en eau est de 5 à 30 % en poids, avec un alkylène glycol en C₂-C₆ et que l'on soumet l'ensemble à une pression supérieure ou égale à 40 bar.

2. Procédé selon la revendication 1, caractérisé par le fait que l'on utilise comme matière végétale de départ, seule ou en mélange, toute épice contenant des antioxydants, notamment le romarin, la sauge, le thym, l'origan et les clous de girofle, et toute plante contenant des antioxydants, notamment le thé vert, le café et les pelures de pommes de terre, et de tomates.

3. Procédé selon la revendication 1, caractérisée par le fait que l'alkylène glycol en C₂-C₆, utilisé comme véhicule, est le glycol, le 1,2-propylène glycol, ou le 1,3-butylène glycol.

4. Procédé selon la revendication 1, caractérisé par le fait que l'on effectue le mélange de la matière végétale de départ et de l'alkylène glycol en C₂-C₆ à 70-100° C.

5. Procédé selon la revendication 1, caractérisé par le fait que le mélange de la matière végétale de départ et de l'alkylène glycol en C₂-C₆ se fait à la température ambiante.

6. Procédé selon la revendication 5 ou 6, caractérisé par le fait que le rapport pondéral alkylène glycol en C₂-C₆ / matière végétale de départ est de 0,5 à 2.

7. Procédé selon la revendication 5 ou 6, caractérisé par le fait que l'on effectue une première extraction au MCT sur une matière végétale par pression, puis on utilise le tourteau comme matière de départ.

8. Procédé selon la revendication 5 ou 6, caractérisé par le fait que l'on effectue un prétraitement enzymatique de la matière végétale en l'incubant avec une glucanase en milieu aqueux, puis on centrifuge la suspension et on sèche la matière végétale ainsi traitée.

9. Procédé selon la revendication 5 ou 6, caractérisé par le fait que l'on effectue une succession d'extractions, en remettant lors de chaque extraction, le liquide limpide recueilli au cours de l'extraction précédente, en présence d'une nouvelle charge de matière végétale.

10. Procédé de protection d'une émulsion alimentaire, cosmétique ou pharmaceutique, caractérisé par le fait que l'on incorpore dans l'émulsion une quantité efficace d'extraits d'antioxydants d'origine végétale obtenus par la mise en oeuvre du procédé selon l'une des revendications 1 à 9.
